# EUROPEAN PATENT SPECIFICATION

(11) **EP 2 275 696 B1**
(45) Date of publication and mention of the grant of the patent: **19.09.2012**
(21) Application number: 09425464.6
(22) Date of filing: 13.11.2009
(51) Int. Cl.: F16C 7/00, F16C 11/06

(54) **A socket for ball joints and the like**
Pfanne für Kugelgelenk und dergleichen
Support pour joints à rotule et similaires

(30) Priority: 14.07.2009 EP 09425280
(43) Date of publication of application: 19.01.2011
(73) Proprietor: Orsolini, Fulvio, 21054 Fagnano Olona (VA) (IT)
(72) Inventor: Orsolini, Fulvio, 21054 Fagnano Olona (VA) (IT)
(74) Representative: Lunati & Mazzoni S.r.L.

(56) References cited:
- DE-A1- 2 443 089
- DE-A1- 10 206 085
- DE-A1-102007 017 949
- FR-A1- 2 928 188
- US-A1- 2009 010 706

## Description

The present invention relates to a socket for ball joints and the like, of the type described in the preamble of claim 1.

In particular, the invention relates to a socket adapted to be housed in a ball joint defining an angular joint and interposed between two rod-like elements, one of which is provided with a spherical head able to be engaged by said ball joint.

It is known that presently ball joints are suitable to enable motion transfer from a drive member to one or more driven elements, also allowing a rotation movement according to several rotation axes between said components.

In the mechanical field, ball joints are used due to the particular type of connection they are able to make. In fact, ball joints enable formation of kinematic link chains provided in the vehicle sector and in the sector of the related transmission or drive members for example, such as those selecting the speeds of a change gear.

The drive member can be a rod having one end connected to the speed- change lever, while the other end is of spherical shape and engages a socket placed inside the ball joint.

Usually the ball joint consists of an outer framework, to which the driven elements are rigidly secured, and inside which a first element of elastomeric material is placed, which is adapted to absorb a first part of the vibrations and that, in turn, contains a metal casing inside which a socket is housed. Finally, the metal casing has a substantially cylindrical cavity to enable housing of the socket.

Said casing comprises a central portion defining a socket seat and an inlet cavity for the moving member that will be engaged inside the socket disposed in the casing.

This inlet cavity is of truncated conical shape with its greatest section facing the socket. In particular, the final section of the inlet cavity is smaller than that of the socket so as to avoid disengagement of the drive member from the socket itself. The socket is usually of elastomeric material and internally has a spherical hollow central part where the spherical end of the drive member is housed and a usually cylindrical mouth placed at the inlet formed in the casing.

Finally, the socket, on the opposite side from the inlet cavity has a flat surface on which an elastic element is placed which is therefore enclosed between the socket and the cap. Said elastic element is usually made of metal and some embodiments thereof are shown in patents EP1798431 and US20070245848, in particular in EP1798431 this element being a helical spring.

DE 10 2007 017 949 and DE 24 43 089 disclose elastic elements made of rubber.

The elastic element, when the drive rod is placed in the socket, is compressed so that the socket is submitted to a force adapted to push it towards the inlet cavity. The known art mentioned above has some important drawbacks.

The described ball joint is of complicated and expensive manufacture.

In addition, as the art progresses, sockets with better physico-mechanical features are required.

In particular, sockets are required which are adapted to enable fitting of the drive rod with increasingly lower forces without reducing the force necessary for disengagement of the rod itself.

In addition, the frequent use of the change gear greatly reduces the lifetime of ball joints thus made.

Under this situation, the technical task underlying the present invention is to conceive a socket for ball joints capable of substantially obviating the mentioned drawbacks.

Within the scope of this technical task, it is an important aim of the invention to provide a socket enabling simple and less expensive ball joints to be manufactured.

Another aim of the invention is to make sockets that are able to offer better performances and longer duration.

A further not least aim of the invention is to enable an easier insertion of the drive member in the ball joint.

The technical task mentioned and the aims specified are achieved by a socket as claimed in the appended claim 1.

Preferred embodiments are highlighted in the sub-claims.

The features and advantages of the invention are hereinafter clarified by the detailed description of some preferred embodiments of the invention, with reference to the accompanying drawings made to scale, in which:
**Fig. 1a** shows a second embodiment, partly in section, of the socket according to the invention;
**Fig. 1b** is a section view of a device provided with the socket in Fig. 2a;
**Fig. 2a** shows a third embodiment, partly in section, of the socket according to the invention;

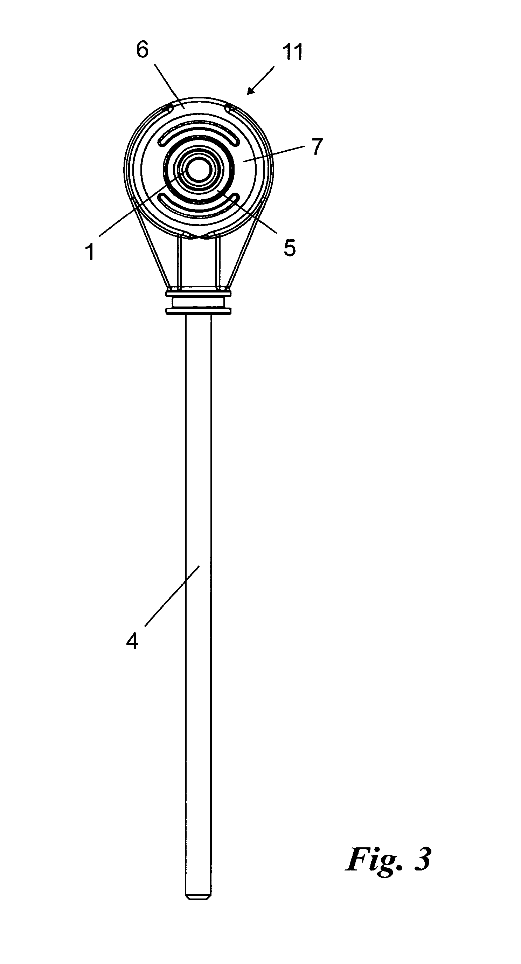

**Fig. 2b** is a section view of a device provided with the socket in Fig. 3a; and
**Fig. 3** is a view of the device including a socket according to the invention.

With reference to the above drawings, the socket for ball joints according to the invention is generally identified with **1.**

The ball joint **11** provided with socket 1 allows passage of motion from a drive member **3** to at least one driven component **4** and is adapted to be used for formation of kinematic link chains.

In particular, the drive member 3 is made up of a rod having a major extension direction **3a** and a spherical end **3b,** while the driven component 4 is a second rod rigidly connected to the joint 11.

The ball joint 11 comprises the socket 1, a casing **5** and a substantially rigid structure **6** adapted to enclose the aforesaid elements and enabling joint 11 to be rigidly connected to the driven component 4.

Finally, usually placed between structure 6 and casing 5 is a deformable body 7 of elastomeric material, adapted to absorb the vibrations and at least part of the efforts to which the ball joint is submitted. At last, this deformable body 7 allows a small rotation of the moving member 3 relative to the ball joint 11 around an axis different from the direction 3a, without causing tensioning of joint 11.

The casing 5 has an inner seat **5a**, preferably in the form of a body of revolution the axis of which is substantially coincident with the direction 3a. This inner seat has a cap **8** at an end thereof, a central portion of cylindrical shape, and a second end defining an inlet mouth **5b.**

In particular, mouth 5b has its smaller section disposed on the outer edge and therefore constitutes the first section encountered by the drive member 3 when it is secured to joint 11. Finally, a cylindrical portion can be provided which extends said smaller section so as to give the joint a greater strength.

The cylindrical portion of the casing 5 cavity and at least part of the inlet mouth 5b define the seat inside which socket 1 is disposed.

Socket 1 comprises a housing body 2 adapted to house the spherical end 3b.

It is made of a polymeric material suitable to ensure appropriate physico-mechanical features; in particular the material must ensure appropriate stiffness and resiliency values and low friction between the housing body 2 itself and the elements with which it is in contact. Preferably the housing body 2 is made of a composite material having a polymeric matrix obtained through union of polyamide, in particular polyamide 6,6, glass fibre, poly-siloxanes and poly-tetrafluoroethylene.

Said housing body 2 comprises an opening **2c** and internally defines a spherical cavity 2a the centre of which is substantially on the major extension direction 3a and has such a size that it holds the spherical end 3b inside the cavity 2a, so that the moving member 3 can easily rotate in all directions.

In particular the spherical cavity 2a has a diameter included between 5 mm and 20 mm, preferably this diameter being of about 10 mm or, alternatively, about 13 mm. Socket 1, and in particular the housing body 2, externally has a geometry adapted to enable an almost perfect coupling with the inner seat 5a. In particular, it has an externally cylindrical upper portion and an externally frustoconical lower portion. Said geometry enables both easy insertion of socket 1 into casing 5, and insertion of the end 3b of the moving member 3 into socket 1.

In addition, due to the particular geometry of the housing body 2 and casing 5, once the moving member 3 has been inserted into the ball joint 11, the spherical end 3b is prevented from undesirably coming out of the housing body 2.

In fact, if member 3 is wished to be separated from joint 11, a force substantially coincident with the direction 3a is required to be exerted. Due to this force, the spherical end 3b tends to come out dragging socket 1 along with it. Therefore, for disengaging the moving member 3 from the housing body 2 a greater force than that present between the moving member 3 and the ball joint 11 during its normal use is required to be exerted.

Finally, socket 1 comprises an elastic element 9, positioned between cap 8 and the housing body 2. It is engaged in a substantially rigid manner with the housing body 2 and is put in contact at least with cap 8.

The elastic element is then adapted to press the housing body 2 in the direction of the drive member 3, i.e. of mouth 5b.

It is conveniently of a circular shape and its axis is coincident with the direction 3a, and in addition it is advantageously made of a polymeric material.

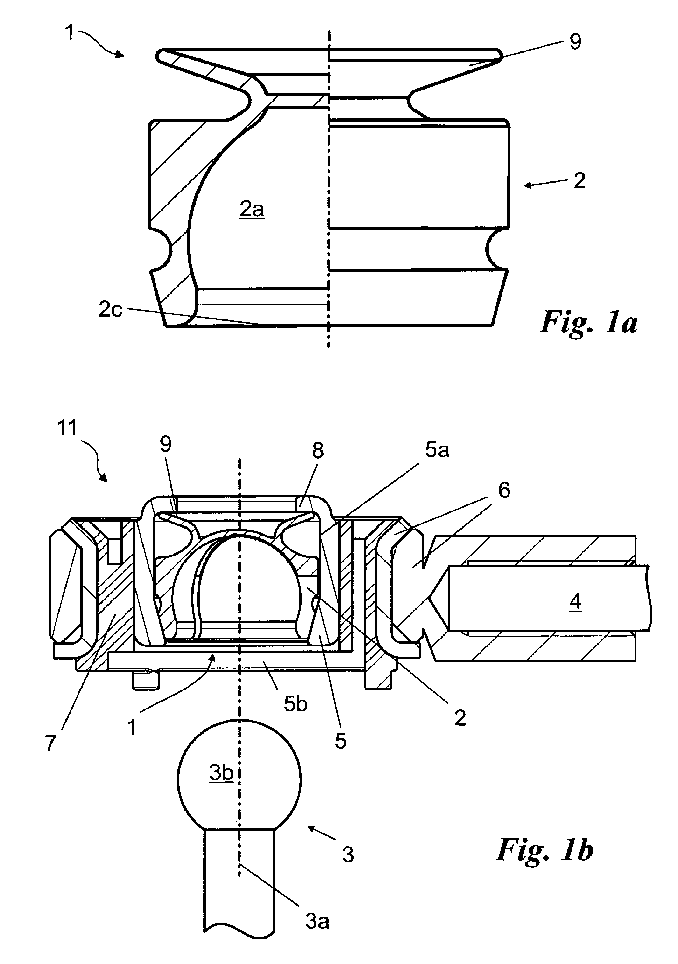

A first embodiment is shown in Figs. 1a-1b.

In this embodiment the elastic element 9 is made of a polymeric material and is of one piece construction with the housing body 2.

In this case, the elastic element 9 consists of a single disc and the junction region between the two elements is suitably linked up so as to offer a sufficient strength without impairing the elasticity of element 9 too much. For instance, in this case the elastic element 9 has an edge of a thickness included between 0.3 mm and 2 mm.

For said socket 1, as shown in Figs. 1a-1b, the fitting force required for inserting the drive member 3 into the socket itself is of about 10 kg force, while the withdrawal force is greater than 25 kg.

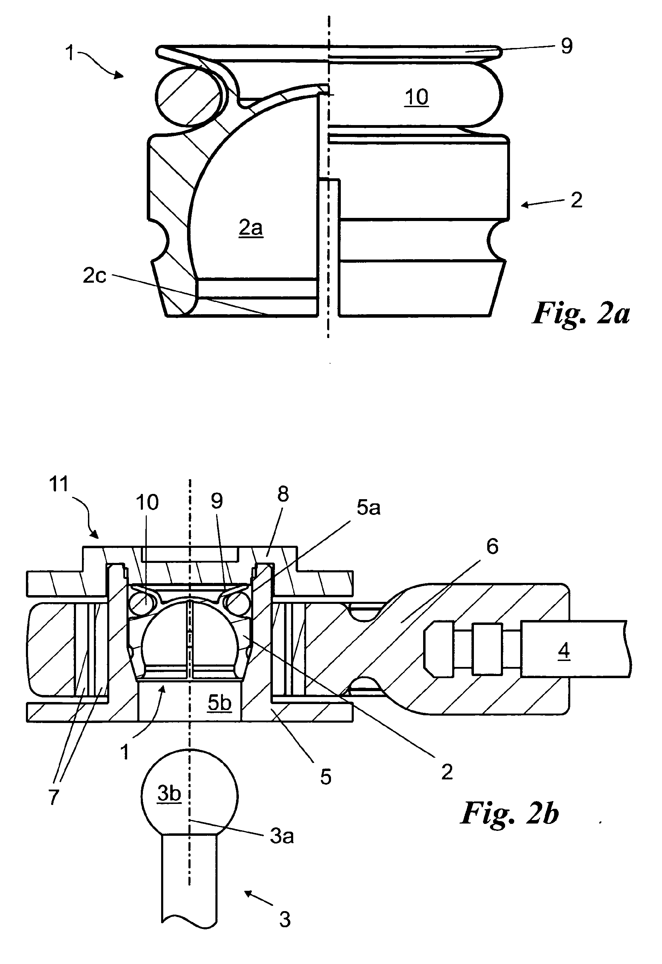

A second embodiment is shown in Figs. 2a-2b.

In this case too the elastic element 9 is made of a polymeric material and is of one piece construction with the housing body 2.

Here again the elastic element 9 consists of a single disc and the junction region between the two elements is suitably linked up so as to offer a sufficient strength without impairing the elasticity of element 9 too much. For instance, in this case the elastic element 9 has the edge of a thickness included between 0.2 mm and 1 mm. In order to ensure more duration to socket 1 a ring 10 is also provided which is made of an elastomeric material, in particular rubber, and is interposed between the housing body 2 and the elastic element 9. In particular said ring 10 is an O-ring. This ring 10 also allows manufacture of an elastic element 9 of smaller thickness as compared with the previously described one.

For said socket 1, as shown in Figs. 2a-2b, the fitting force required for inserting the drive member 3 into the socket itself is of about 7.5 kg force, while the withdrawal force is greater than 25 kg.

Operation of the ball joint described above as regards structure is the following. During mounting the different elements can be assembled to each other in a simple and quick manner, in particular the operation of housing socket 1 in casing 5 is made possible due to the elasticity of socket 1 that is initially elastically compressed to enable passage from the inlet mouth 5b and subsequently becomes expanded and takes up the inner seat of casing 5.

Then by applying a suitable force, the moving member 3 is inserted into the ball joint 11 and in particular the end 3b into the housing body 2, a direction force almost coincident with the direction 3a being exerted.

Said force causes the elastic element 9 to be submitted to an elastic deformation. This deformation takes place due to sliding of element 9 along the wall of the casing 5 seat or, alternatively, due to its compression against cap 8.

This elastic deformation enables socket 1 to be pressed in a direction almost parallel to the direction 3a on the inlet mouth 5b, therefore preventing the moving member 3 from unintentionally coming out of its housing.

In addition, socket 1 due to its physico-mechanical features, is able to absorb possible movements along a plane substantially perpendicular to the direction 3a. The invention offers important advantages.

In fact, the described ball joint 11 is characterised by a simpler construction and a more reduced manufacturing cost.

In addition, the elastic element 9 secured to the housing body 2 enables manufacture of a device of more reduced bulkiness than known devices.

The ball joint 11, with socket 1, allows a better distribution of the efforts and deformations. In fact, due to its particular geometry, the elastic element 9 is able to absorb possible displacements of socket 1 along a plane perpendicular to the direction 3a, also enabling the housing body 2 to set again with the centre of the spherical cavity 2a coincident with said direction 3a.

A further advantage is obtained due to the materials used for socket 1 which allow less decay to be obtained and therefore a longer lifetime of the ball joint 11.

In fact, these materials ensure minimum friction between socket 1 and the elements contacting it, the drive member 3 and casing 5, and therefore smaller efforts act on the ball joint 11.

A further advantage due to said materials is represented by the fact that no grease or other substances suitable for friction reduction are required to be used.

Furthermore, said materials ensure high stiffness and simultaneously high elasticity values to be reached by socket 1.

All of the details can be replaced by equivalent elements and the materials, shapes and sizes can be of any nature and magnitude.

## Claims

1. A socket (1) for a ball joint (11), said ball joint (11) being adapted to enable transfer of motion from a drive member (3) having a major extension direction (3a) and a spherical end (3b), to at least one driven member (4) rigidly connected to said ball joint (11), said socket (1) comprising a housing body (2) of one piece construction having an opening (2c) and including a substantially spherical cavity (2a) adapted to house said spherical end (3b), an elastic element (9) rigidly in engagement with said housing body (2) on the opposite side relative to said opening (2c) and adapted to press said housing body (2) in the direction of said drive member (3) and **characterised in that** said housing body (2) and elastic element (9) are of one piece construction.

2. A socket (1) as claimed in claim 1, wherein said housing body (2) is made of a composite material with a polymeric matrix comprising polyamide, glass fibre, poly-siloxanes and poly-tetrafluoroethylene.

3. A socket (1) as claimed in one or more of the preceding claims, wherein said elastic element (9) has a circular shape and is coaxial with said direction (3a).

4. A socket (1) as claimed in one or more of the preceding claims, comprising a ring (10) of elastomeric material, located between said housing body (2) and elastic element (9) and adapted to strengthen said elastic element (9).

5. A socket (1) as claimed in claim 4, wherein said ring (10) is an O-ring.

6. A ball joint (11) adapted to allow transfer of motion from a drive member (3) having a major extension direction (3a) and a spherical end (3b), to at least one driven component (4) rigidly connected to said ball joint (11) and comprising a socket (1) as claimed in one or more of the preceding claims.

7. A ball joint (11) as claimed in claim 9, comprising: a casing (5) adapted to house said socket (1), a substantially stiff structure (6) adapted to enclose said casing (5) and rigidly connected to said driven component (4), a deformable body (7) of elastomeric material included between said structure (6) and casing (5) and adapted to absorb the vibrations and at least part of the efforts to which said ball joint (11) is submitted.

## Patentansprüche

1. Pfanne (1) für Kugelgelenk (11), wobei das besagte Kugelgelenk (11) geeignet ist, die Übertragung der Bewegung von einem Steuerelement (3) zu ermöglichen, das eine vorherrschende Erstreckungsrichtung (3a) und ein kugeliges Ende (3b) aufweist, mindestens zu einem geführten Teil (4), das mit dem besagten Kugelgelenk (11) integriert ist, wobei die besagte Pfanne (1) einen Aufnahmekörper (2) aufweist, der eine Öffnung (2c) und eine im Wesentlichen kugelige Aussparung (2a) aufweist, die geeignet ist, das besagte kugeliges Ende (3b) aufzunehmen, wobei ein Federelement (9) fest mit dem besagten Aufnahmekörper (2) von einer Seite gegenüber der besagten Öffnung (2c) verbunden ist, und das geeignet ist, den besagten Aufnahmekörper (2) in die Richtung des besagten Steuerelement (3) zu drücken, und **gekennzeichnet dadurch, dass** der besagte Aufnahmekörper (2) und das besagte Federelement (9) aus einem einzigen Stück sind.

2. Pfanne (1) nach Anspruch 1, wobei der besagte Aufnahmekörper (2) aus einem Verbundmaterial mit einer Polymer-Matrix besteht, das Polyamid, Glasfaser, Polysiloxane und Polytetrafluoretylen umfasst.

3. Pfanne (1) nach einer oder mehreren der voranstehenden Ansprüchen, wobei das besagte elastisches Element (9) eine runde Gestalt aufweist, die koaxial zu der der besagten Richtung (3a) ist.

4. Pfanne (1) nach einer oder mehreren der voranstehenden Ansprüchen, einen Elastomer-Ring (10) umfassend, der zwischen dem besagten Aufnahmekörper (2) und dem besagten elastischen Element (9) angeordnet und geeignet ist, das besagte elastisches Element (9) zu verstärken.

5. Pfanne (1) nach Anspruch, wobei der besagte Ring (10) ein O-Ring ist.

6. Kugelgelenk (11), das angepasst ist, um die Übertragung der Bewegung von einem Steuerelement (3) zu ermöglichen, das eine vorherrschende Verlaufsrichtung (3a) und ein kugeliges Ende (3b) aufweist, mindestens zu einem angetrieben Glied (4), das mit dem besagten Kugelgelenk integriert ist, und das eine Pfanne (1) nach einem oder mehreren der voranstehenden Ansprüchen umfasst.

7. Kugelgelenk (11) nach Anspruch 6, umfassend: ein Gehäuse (5), das geeignet ist, die besagte Pfanne (1) zu aufnehmen, eine im Wesentlichen starre Struktur (6), die geeignet ist, das besagte Gehäuse (5) zu umfassen und fest mit diesem geführten Teil (4) verbunden ist, einen verformbaren Körper (7) aus Elastomer-Material, der zwischen der besagten Struktur (6) und dem besagten Gehäuse (5) angeordnet und in del Lage ist, die Vibrationen und mindestens teilweise die Belastungen aufzunehmen, denen das besagte Kugelgelenk (11) unterliegt.

## Revendications

1. Support (1) pour joint à rotule (11), ledit joint à rotule (11) étant apte à permettre le transfert de mouvement depuis un organe de commande (3) ayant une direction (3a) d'extension principale et une extrémité sphérique (3b), jusqu'à au moins un composant mené (4) solidaire dudit joint à rotule (11), ledit support (1) comprenant un corps de logement (2) présentant une ouverture (2c) et ayant une cavité sensiblement sphérique (2a) apte à loger ladite extrémité sphérique (3b), un élément élastique (9) lié de manière solidaire audit corps de logement (2) du côté opposé par rapport à ladite ouverture (2c) et destiné à presser ledit corps de logement (2) en direction dudit organe de commande (3) et **caractérisé en ce que** ledit corps de logement (2) et ledit élément élastique (9) sont d'un seul tenant.

2. Support (1) selon la revendication 1, dans lequel ledit corps de logement (2) est réalisé en une matière composée de matrice polymérique comprenant polyamide, fibre de verre, poly-siloxanes et polytétrafluoroéthylène.

3. Support (1) selon une ou plusieurs des revendications précédentes, dans lequel ledit élément élastique (9) est de forme circulaire coaxial à ladite direction (3a).

4. Support (1) selon une ou plusieurs des revendications précédentes, comprenant une bague (10) en élastomère placée entre ledit corps de logement (2) et ledit élément élastique (9) et destinée à renforcer ledit élément élastique (9).

5. Support (1) selon la revendication 4, dans lequel ladite bague (10) est une garniture de type "O-ring".

6. Joint à rotule (11) destiné à permettre le transfert de mouvement depuis un organe de commande (3) ayant une direction (3a) d'extension principale et une extrémité sphérique (3b), jusqu'à au moins un composant mené (4) solidaire dudit joint à rotule (11), et comprenant un support (1) selon une ou plusieurs des revendications précédentes.

7. Joint à rotule (11) selon la revendication 6, comprenant: une enveloppe (5) destinée à loger ledit support (1), une structure (6) sensiblement rigide, apte à renfermer ladite enveloppe (5) et solidaire dudit composant mené (4), un corps déformable (7) de matière élastomère, compris entre ladite structure (6) et ladite enveloppe (5) et destiné à absorber les vibrations et au moins une partie des efforts auxquels ledit joint à rotule (11) est exposé.
